# EUROPEAN PATENT SPECIFICATION

(11) **EP 3 139 543 B1**
(45) Date of publication and mention of the grant of the patent: **23.03.2022**
(21) Application number: 15833816.0
(22) Date of filing: 15.01.2015
(51) Int. Cl.: H04L 12/28, H04L 29/12, H04L 29/08

(54) **SETTING OF ADDRESSES IN AN AIR-CONDITIONING SYSTEM**
ADDRESSZUWEISUNG IN EINEM KLIMAANLAGENSYSTEM
ALLOCATION D'ADRESSES DANS UN SYSTÈME DE CLIMATISATION

(30) Priority: 22.08.2014 JP 2014169578
(43) Date of publication of application: 08.03.2017
(73) Proprietor: Mitsubishi Heavy Industries, Ltd., Tokyo 108-8215 (JP)
(72) Inventor: ENYA, Atsushi, Tokyo 108-8215 (JP); ITO, Takahide, Tokyo 108-8215 (JP); MATSUO, Minoru, Tokyo 108-8215 (JP)
(74) Representative: Cabinet Beau de Loménie
(86) International application number: PCT/JP2015/050975
(87) International publication number: WO 2016/027478

(56) References cited:
- EP-A1- 1 302 727
- EP-A1- 2 007 085
- WO-A1-2009/099203
- JP-A- H06 323 611
- JP-A- 2005 269 465
- JP-A- 2009 111 923
- US-A- 5 499 510
- US-A1- 2002 054 520
- THOMSON CISCO T NARTEN IBM T JINMEI TOSHIBA S: "IPv6 Stateless Address Autoconfiguration; rfc4862.txt", NETWORK WORKING GROUP RFC 1717, INTERNET SOCIETY (ISOC) 4, RUE DES FALAISES CH- 1205 GENEVA, SWITZERLAND, CH, 1 September 2007 (2007-09-01), XP015052408, ISSN: 0000-0003

## Description

### Technical Field

The present invention relates to an air-conditioning system, and an associated method for such an air-conditioning system.

### Background Art

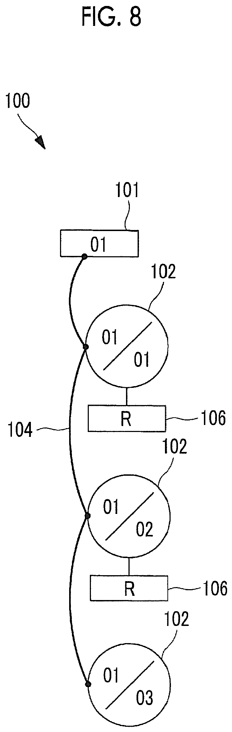

As a system in which plural devices are connected to each other through a communication medium, for example, as shown in a schematic view of Fig. 8, an air-conditioning system (multi air-conditioner) 100 in which one outdoor unit 101 and plural indoor units 102 are connected to each other through refrigerant pipes and a communication medium (communication network) 104 has been developed. The indoor unit 102 shown in Fig. 8 may be controlled using a remote controller 106.

In such an air-conditioning system, PTL 1 discloses a technique that recognizes respective refrigerant specifications, capacity rankings or device types using communication means when supplying power to a device and determines whether an outdoor unit is connectable to determine a connection abnormality before starting an operation of the air-conditioning system.

Here, in order to allow transmission and reception of information through the communication medium 104, it is necessary to set an address with respect to each indoor unit 102.

In the related art, in address setting, in a case where only one refrigerant pipe system is provided as shown in Fig. 8, an address of the outdoor unit 101 is fixed and addresses of the indoor units 102 in the network are automatically numbered to perform automatic address setting. In the example of Fig. 8, a numeral in a rectangular box indicating the outdoor unit 101 is a number (address) of the outdoor unit 101. Further, an upper left numeral among numerals in a circle indicating each indoor unit 102 is a number of the outdoor unit 101 connected thereto, and a lower right numeral is a number of the indoor unit 102 for which the order of communication with the outdoor unit 101 is fixedly set. A combination of the upper left numeral and the lower right numeral is set as an address for each indoor unit 102.

### Citation List

### Patent Literature

[PTL 1] Japanese Unexamined Patent Application Publication No. 2006-78043. Document EP 2 007 085 discloses an IPv6 address including a management ID, a device ID, a function ID, and the like for each network device (corresponding to the address and specification of each indoor unit). Document US 5 499 510 discloses that, after a trial run is performed, a group address (corresponding to the address of each outdoor unit) and a unit address ((corresponding to the address of each indoor unit) are determined. Document EP 1 302 727 discloses an air conditioning system having a plurality of indoor units and a method for controlling the same.

### Summary of Invention

### Technical Problem

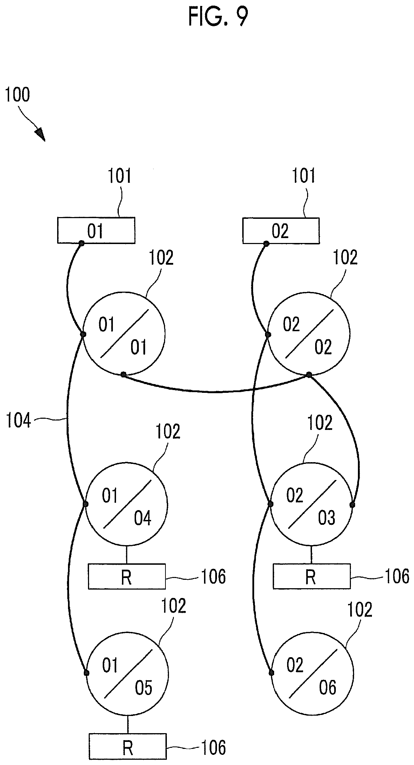

On the other hand, as shown in Fig. 9, if two or more refrigerant pipe systems are provided, there is a case where plural outdoor units 101 are onnected to one indoor unit 102 through a communication medium 104. In such a case, since addresses of the outdoor units 101 with respect to the indoor unit 102 cannot be fixed, it is difficult to automatically perform address setting. Thus, for example, address setting is performed using a method for manually inputting information relating to connection between the outdoor units 101 and the indoor unit 102.

However, in the manual address setting, there is a concern that an artificial mistake may occur.

Further, even in a case where automatic address setting is possible, in a case where an address is given to the indoor unit 102 according to a fixed communication order, an address of the indoor unit 102 may be changed whenever a power source of an air-conditioning System is turned off. As a result, for example, since an address of a certain indoor unit 102 may become 1, or may become 10, a manager of the air-conditioning system 100 cannot easily recognize an address given to each indoor unit 102.

In addition, in a case where an installer and a user of an air-conditioning system are different from each other, there is a case where a rate structure for charging an electric bill with respect to the air-conditioning system (indoor unit 102) to the user is used. In such a case, in order to conveniently and accurately perform billing, it is preferable that an address of the indoor unit 102 is fixed. Thus, for example, the address of the indoor unit 102 is set not to be changed using a physical switch such as a DIP switch.

Furthermore, when checking for the presence or absence of a mistake in execution of a trial run of the air-conditioning system, in order to reliably check an indoor unit 102 where a problem occurs, there is a case where an address of the indoor unit 102 is fixed only in the trial run.

As described above, it is preferable to automatically set an address with respect to the indoor unit 102 of the air-conditioning system 100, but there are cases where it is difficult to automatically set a unique address, and in such cases, address setting is performed through a separate manual operation or the like.

Furthermore, there is a case where details of a specification of the indoor unit 102 are not clear to a control device, such as a case where a manufacturer of the indoor unit 102 and a manufacturer of a control device of the air-conditioning system 100 are different from each other, for example. In such a case, it is necessary that the control device separately receives information relating to the specification from the indoor unit 102.

The invention has been made in consideration of the above-mentioned problems, and an object thereof is to provide an address setting device, an air-conditioning system, and an address setting method capable of uniquely determine addresses of plural devices.

### Solution to Problem

In order to solve the above-mentioned problems, an air-conditioning system according to independent claim 1 and a corresponding method according to independent claim 4 are provided. Preferred embodiments of the invention are set out in the dependent claims.

### Advantageous Effects of Invention

According to the invention, it is possible to achieve an effect capable of uniquely determining addresses of plural devices.

### Brief Description of Drawings

Fig. 1 is a diagram illustrating a refrigerant system of an air-conditioning system according to an embodiment of the invention.
Fig. 2 is a diagram illustrating an electrical configuration of an air-conditioning system according to an embodiment of the invention.
Fig. 3 is a functional block diagram relating to address setting in an indoor-unit local controller according to an embodiment of the invention.
Fig. 4 is a schematic view illustrating an example of an indoor unit address according to an embodiment of the invention.
Fig. 5 is a flowchart illustrating a flow of a trial run process according to an embodiment of the invention.
Fig. 6 is a flowchart illustrating a flow of a device authentication process according to an embodiment of the invention.
Fig. 7 is a flowchart illustrating a flow of a device authentication process according to an embodiment of the invention.
Fig. 8 is a schematic view illustrating an example of an air-conditioning system.
Fig. 9 is a schematic view illustrating an example of an air-conditioning system.

### Description of Embodiments

Hereinafter, embodiments of the invention will be described with reference to the accompanying drawings.

In this embodiment, a system in which plural devices are connected to each other through a communication medium and transmission and reception of information is performed between the devices is shown as an example of an air-conditioning system. That is, the devices refer to an indoor unit, an outdoor unit, and a control device that form the air-conditioning system, and the information refers to measurement results of various sensors, control signals, or the like.

Further, the air-conditioning system according to this embodiment is provided in a large commercial facility, a building, or the like, for example.

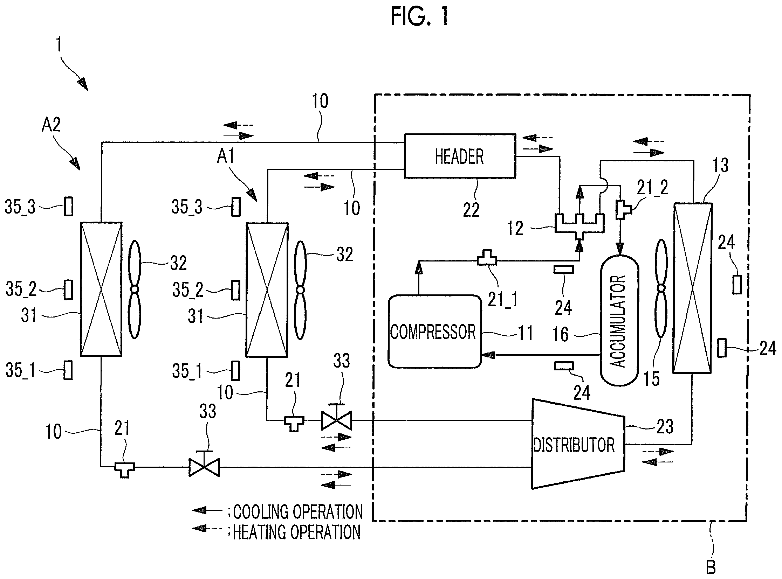

Fig. 1 is a diagram illustrating a refrigerant system of an air-conditioning system 1 according to this embodiment. As shown in Fig. 1, the air-conditioning system 1 includes one outdoor unit B, and plural indoor units A1 and A2 connected to the outdoor unit B through a common refrigerant pipe 10. In Fig. 1, for ease of description, a configuration in which two indoor units A1 and A2 are connected to one outdoor unit B is shown, but the number of installed outdoors B and the number of connected indoor units A1 and A2 are not limited.

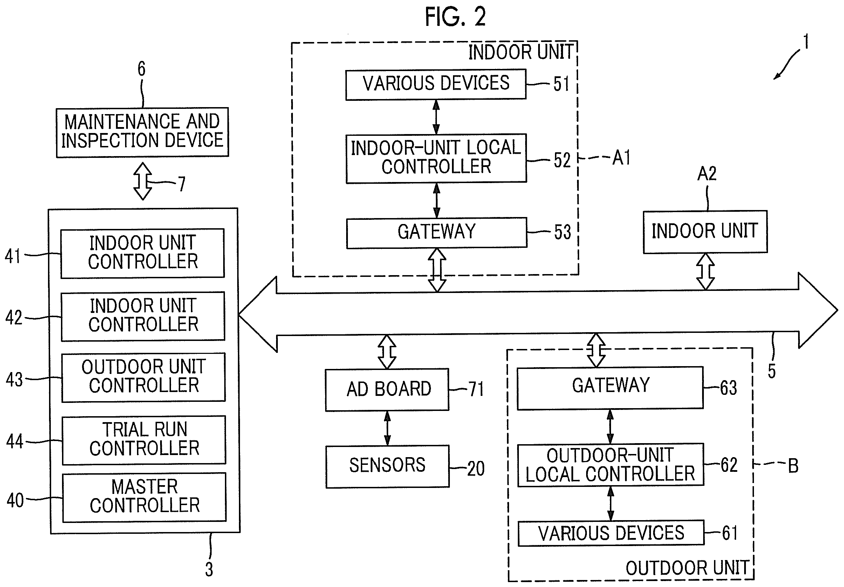

The outdoor unit B includes, for example, a compressor 11 that compresses a refrigerant for transmission, a four-way valve 12 that switches a circulation direction of the refrigerant, an outdoor heat exchanger 13 that performs heat exchange between the refrigerant and outside air, an outdoor fan 15, an accumulator 16 provided in a suction side pipe of the compressor 11, for example, to perform gas-liquid separation from the refrigerant, and the like. Further, various sensors 20 (see Fig. 2) such as a pressure sensor 21 that measures a refrigerant pressure (a high pressure sensor 21_1 and a low pressure sensor 21_2) or a temperature sensor 24 that measures a temperature of the refrigerant or the like are provided in the outdoor unit B. The high pressure sensor 21_1 measures a pressure of a refrigerant discharged from the compressor 11, and the low pressure sensor 21_2 measures a pressure of a refrigerant sent to the compressor 11.

Each of the indoor units A1 and A2 includes an indoor heat exchanger 31, an indoor fan 32, an indoor-unit expansion valve 33 which is an electronic expansion valve, for example, and the like. Each of two indoor units A1 and A2 is connected to each refrigerant pipe 10 branched from a header 22 and a distributor 23 in the outdoor unit B.

An indoor-unit temperature sensor 35_1 measures an inlet refrigerant temperature in the indoor heat exchanger 31, an indoor-unit temperature sensor 35_2 measures an intermediate refrigerant temperature in the indoor heat exchanger 31, and an indoor-unit temperature sensor 35_3 measures an outlet refrigerant temperature in the indoor heat exchanger 31.

As an example, the indoor units A1 and A2 or the outdoor unit B may be manufactured by a manufacturer different from that of a control device 3 (which will be described later) as long as they satisfy their specifications.

Fig. 2 is a diagram illustrating an electrical configuration of the air-conditioning system 1 according to the present embodiment. As shown in Fig. 2, a configuration in which the indoor units A1 and A2, the outdoor unit B, and the control device 3 are connected to one another through a common bus 5 and information exchange is possible therebetween is used. The common bus 5 is an example of a communication medium, and communication may be performed in a wireless or wired manner.

The control device 3 is connected to a maintenance and inspection device 6 that performs maintenance and inspection through a communication medium 7, and is configured to periodically transmit working data or to rapidly notify, when an abnormality occurs, information indicating that the abnormality occurs.

Here, in an air-conditioning system in the related art, a control device is individually provided inside each indoor unit and each outdoor unit. On the other hand, in the present embodiment, indoor-unit control units 41 and 42, and an outdoor unit control unit 43 are provided independently of the indoor units A1 and A2, and the outdoor unit B. Specifically, the indoor-unit control unit 41 that controls the indoor unit A1, the indoor-unit control unit 42 that controls the indoor unit A2, and the outdoor unit control unit 43 that controls the outdoor unit B are respectively mounted in the control device 3 as virtualized control units. Further, when performing a trial run of the air-conditioning system 1, the control device 3 includes a trial run control unit 44 that controls the indoor unit A1 and the outdoor unit B according to a predetermined processing order.

Specifically, the indoor-unit control unit 41 that controls the indoor unit A1, the indoor-unit control unit 42 that controls the indoor unit A2, the outdoor unit control unit 43 that controls the outdoor unit B, and the trial run control unit 44 are respectively mounted in the control device 3 as virtualized control units.

That is, the indoor-unit control units 41 and 42, and the outdoor unit control unit 43 are collectively provided in the control device 3 having one piece of hardware, and are able to be independently operated on the hardware included in the control device 3. The control device 3 includes a master control unit 40 that causes the indoor-unit control units 41 and 42, and the outdoor unit control unit 43 to be virtually present in the control device.

In the control device 3, the indoor-unit control units 41 and 42, and the outdoor unit control unit 43 are configured to perform information exchange therebetween. Further, the indoor-unit control units 41 and 42, and the outdoor unit control unit 43 may perform autonomous distributed controls for realizing independent autonomous distributed controls while sharing information. Here, the autonomous distributed control refers to a control for receiving information from the sensors 20 or the other control units (for example, if a concerned control unit is the indoor-unit control unit 41, the indoor-unit control unit 42 and the outdoor unit control unit 43 correspond to the other control units) and causing a predetermined application to give a control command to a corresponding unit among the indoor units A1 and A2 and the outdoor unit B (for example, if the concerned control unit is the indoor-unit control unit 41, the indoor unit A1 is a corresponding unit) according to a control rule using the information as an input.

In the indoor unit A1, indoor-unit local controllers 52 which are respectively provided corresponding to various devices 51 such as the indoor fan 32 and the indoor-unit expansion valve 33 (see Fig. 1) are connected to the common bus 5 through a gateway (communication means) 53. Although not shown, the indoor unit A2 has the same configuration as that of the indoor unit A1.

In the outdoor unit B, outdoor-unit local controllers 62 which are respectively provided corresponding to various devices 61 such as the compressor 11, the four-way valve 12 and the outdoor fan 13 (see Fig. 1) are connected to the common bus 5 through a gateway (communication means) 63.

The gateways 53 and 63 are groups of functions including a communication driver, an address storage area, a device attribute storage area, a component device information storage area, an OS, and a communication frame work, for example.

The address storage area refers to a storage area for storing an address which is a unique identification number allocated for communication with the control device 3 or the like. Details about an address setting method will be described later.

Further, the device attribute storage area refers to a storage area for storing attribute information of the indoor units and the outdoor unit and attribute information of the devices 51 and 61 that belong thereto, and for example, information such as information (for example, the number of fans, full pulse of a valve, or the like) indicating whether a concerned unit is an indoor unit or an outdoor unit, information about a capacity thereof and mounted sensors (for example, a temperature sensor, a pressure sensor, and the like), or device information (for example, the number of fan taps, a full pulse of a value, or the like) is stored therein.

Further, the sensors 20 (for example, a pressure sensor that measures a refrigerant pressure, a temperature sensor that measures a refrigerant temperature, and the like) installed in the outdoor unit B and the indoor units A1 and A2 are respectively connected to the common bus 5 through an AD board 71. Here, in a case where a measurement accuracy of the sensors 20 is low, a node having a correction function for correcting a measurement value may be provided between the AD board 71 and the sensors 20. By providing the correction function in this way, it is possible to use a sensor of which the measurement accuracy is not so high at a low price as the sensors 20.

In such an air-conditioning system 1, for example, the indoor-unit control units 41 and 42 of the control device 3 acquire measurement data or control information from the sensors 20, the indoor-unit local controller 52, and the outdoor-unit local controller 62 through the common bus 5, and execute a predetermined indoor-unit control program based on the measurement data and output a control command to various devices (for example, the indoor fan 32, the indoor-unit expansion valve 33, or the like) provided in the indoor units A1 and A2. The control commands are transmitted to the indoor-unit local controller 52 through the common bus 5 and the gateway 53. The indoor-unit local controller 52 drives each corresponding device based on the received control command. Thus, the control of the indoor units A1 and A2 is realized based on the control commands.

Similarly, the outdoor unit control unit 43 of the control device 3 acquires measurement data or control information from the sensors 20, the indoor-unit local controller 52, the outdoor-unit local controller 62 through the common bus 5, and executes a predetermined outdoor unit control program based on the measurement data, and outputs a control command to various devices (for example, the compressor 11, the four-way valve 12, the outdoor heat exchanger 13, the outdoor fan 15, or the like) provided in the outdoor unit B. The control command is transmitted to the outdoor-unit local controller 62 through the common bus 5 and the gateway 63. The outdoor-unit local controller 62 drives each corresponding device based on the received control command.

The indoor units A1 and A2, and the outdoor unit B may be subjected to an autonomous distributed control by the indoor-unit control units 41 and 42, and the outdoor unit control unit 43, respectively. In this case, a control rule is set between the indoor units A1 and A2, and the outdoor unit B, and the indoor units A1 and A2, and the outdoor unit B are respectively controlled according to the control rule. For example, in the case of a refrigerant pressure, in a case where the refrigerant pressure acquired from the sensors 20 is within a predetermined first allowable variation range, the indoor units A1 and A2 determine control commands for matching a set temperature or a set air flow set by a user or the like and an actual temperature or an actual air flow, and output the control commands to the indoor units A1 and A2 through the common bus 5, respectively. Here, the indoor-unit control units 41 and 42 may cooperate to perform information exchange to determine respective control commands. Further, the outdoor unit control unit 43 determines an output command of the air-conditioning system 1 for maintaining the refrigerant pressure within a predetermined second allowable variation range, for example, a control command relating to a rotation speed of the compressor 11, a rotation speed of the outdoor fan 15, or the like, and transmits the output command or control command to the outdoor unit B through the common bus 5.

For example, by setting the first allowable variation range to be larger than the second allowable variation range, the outdoor unit control unit 43 may grasp output change information of the indoor units A1 and A2, and may determine a behavior of the outdoor unit B.

Each of the control device 3, the indoor-unit local controller 52, and the outdoor-unit local controller 62 includes a central processing unit (CPU), a random access memory (RAM), a read only memory (ROM), a computer-readable storage medium, and the like, for example. Further, a series of processes for realizing various functions is stored in a storage medium or the like in the form of a program, for example, and the CPU reads the program into the RAM or the like to execute information processing and calculation operations, to thereby realize the various functions. The program may be installed in advance in the ROM or another storage medium, may be provided in a state of being stored in a computer-readable storage medium, or may be distributed through a communication medium in a wired manner or a wireless manner, for example. The computer-readable storage medium refers to a magnetic disc, a magneto-optical disc, a CD-ROM, a DVD-ROM, a semiconductor memory, or the like.

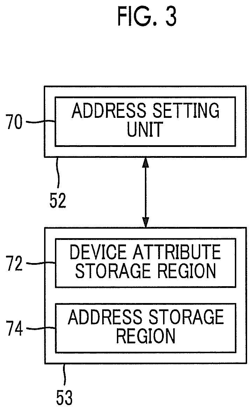

Fig. 3 is a functional block diagram relating to address setting in the indoor-unit local controller 52 according to an embodiment. In the following description, in a case where the indoor units A1 and A2 are distinguished from each other, "1" or "2" is added to reference sign "A", and in a case where the indoor units A1 and A2 are not distinguished from each other, "1" or "2" is not added thereto.

The indoor-unit local controller 52 includes an address setting unit 70.

The address setting unit 70 sets an address for each indoor unit A so that the address includes a value indicating a specification of the indoor unit A (hereinafter, referred to as "indoor unit specification information"). The address is configured by numerals, alphabetic characters, a combination of numerals and alphabetic characters, or the like.

The indoor unit specification information refers to an indoor unit capacity, an indoor unit type, the number of temperature sensors, a specification of the indoor-unit expansion valve 33, the number of fan taps, or the like, for example. The specification of the indoor unit A is stored in a device attribute storage area 72 of the above-described gateway 53 according to a predetermined format in a manufacturing step of the indoor unit A.

That is, the address setting unit 70 reads the indoor unit specification information stored in the device attribute storage area 72 to set the address of the indoor unit A, and stores the set address (hereinafter, referred to as "setting address") in an address storage area 74 of the gateway 53.

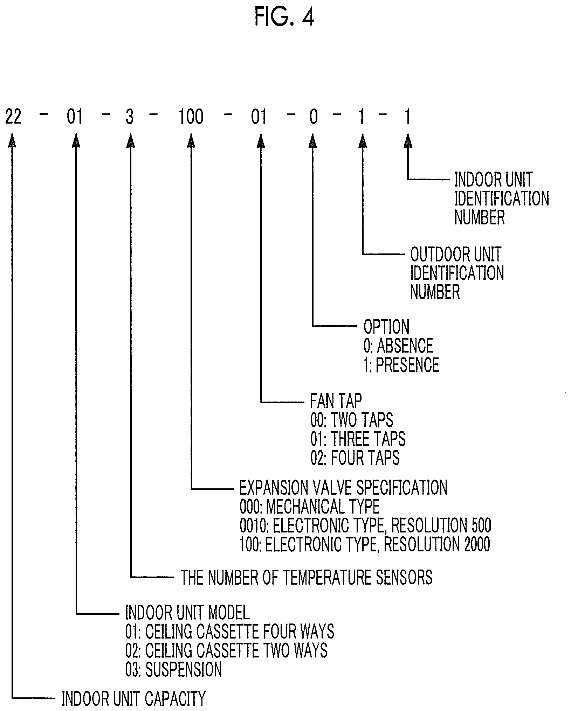

Fig. 4 shows an example of the address of the indoor unit A set by the address setting unit 70.

The address shown in Fig. 4 represents an indoor unit capacity, an indoor unit type, the number of temperature sensors, an expansion valve specification, the number of fan taps, the presence or absence of an option, an identification number (address) of the outdoor unit B to be connected, and an identification number of the indoor unit A, in the order from the left end.

A case where the identification number of the indoor unit A is given refers to a case where another indoor unit A having the same specification is connected to the same outdoor unit B. In such a case, for example, the identification numbers of the indoor units A are given in an ascending order in the order that the setting addresses are given, or predetermined identification numbers may be given. On the other hand, in a case where another indoor unit A having the same specification is not present, the identification number of the indoor unit A may not be given to the setting address.

In this way, the address of each indoor unit A is set by the address setting unit 70 so as to include the indoor unit specification information. The indoor unit specification information is not changed if the specification of the indoor unit A is not changed. Thus, the indoor-unit local controller 52 causes the indoor unit specification information to be included in the address of the indoor unit A, to thereby make it possible to uniquely determine the address of the indoor unit A.

Further, since the indoor unit specification information is information stored in the indoor-unit local controller 52, an artificial mistake due to manual address setting as in the related art is prevented.

Furthermore, the specification of the indoor unit A is transmitted to other devices such as the control device 3 or the outdoor unit B as an address. Thus, the indoor unit A may cause other devices such as the control device 3 or the outdoor unit B to recognize the indoor unit specification information thereof without separately transmitting the indoor unit specification information to the other devices.

For example, the control device 3 may recognize the specification of the indoor unit A by recognizing the address without accessing the indoor-unit local controller 52 in order to recognize the specification of the indoor unit A. Thus, for example, even in a case where details about the specification of the indoor unit A are not clear to the control device 3, for example, even in a case where a manufacturer of the indoor unit A and a manufacturer of the control device 3 are different from each other, the control device 3 may easily recognize the indoor unit specification information from the indoor unit A by merely confirming the address.

In this way, since the indoor unit specification information of the indoor unit A is transmitted together with the address in a batch, it is not necessary to separately perform transmission and reception of the indoor unit specification information, and thus, a communication load of the common bus 5 is reduced.

For example, in the air-conditioning system 1 that includes several tens of indoor units A to 100 or more indoor units A, a communication traffic volume through the common bus 5 becomes enormous. Thus, if a configuration in which the indoor unit specification information is recognizable by setting addresses of the indoor units A is used, a communication load is reduced.

A switch that enables various settings (including address setting) in a manual manner, or the like, may be provided in the indoor-unit local controller 52.

Further, in this embodiment, a trial run of the air-conditioning system 1 is performed, and an address is set for each indoor unit A of which an operation is confirmed. Accordingly, since the operation confirmation of the indoor unit A and the address setting are performed at the same time, the address for each indoor unit A is uniquely determined with high efficiency.

In addition, for example, in a system in which multiple (for example, 10 or more) devices are connected to a network, it may be considered that the multiple devices are divided into plural groups and a trial run is performed for each group. Further, an address may be associated with each group.

For example, the grouping may be performed for each same refrigerant pipe system to be managed in pipe installation in the air-conditioning system 1, that is, for each group of the indoor units A connected to one outdoor unit B.

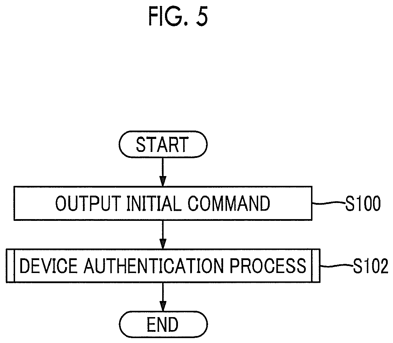

Fig. 5 is a flowchart indicating a flow of a trial run process according to the present embodiment. The trial run process is executed by the trial run control unit 44 included in the control device 3.

First, in step 100, an initial command for setting a temporary address for an indoor unit A is output to the indoor-unit local controller 52 provided in each indoor unit A. As the temporary addresses, for example, numerical values starting from "0" are sequentially allocated to the respective indoor units A. In the outdoor unit B, numerical values starting from "0" are sequentially allocated to the respective indoor units A as unique addresses.

In the next step 102, a device authentication process of simultaneously performing confirmation of connection between the indoor unit A and the outdoor unit B and address setting of the indoor unit A is executed.

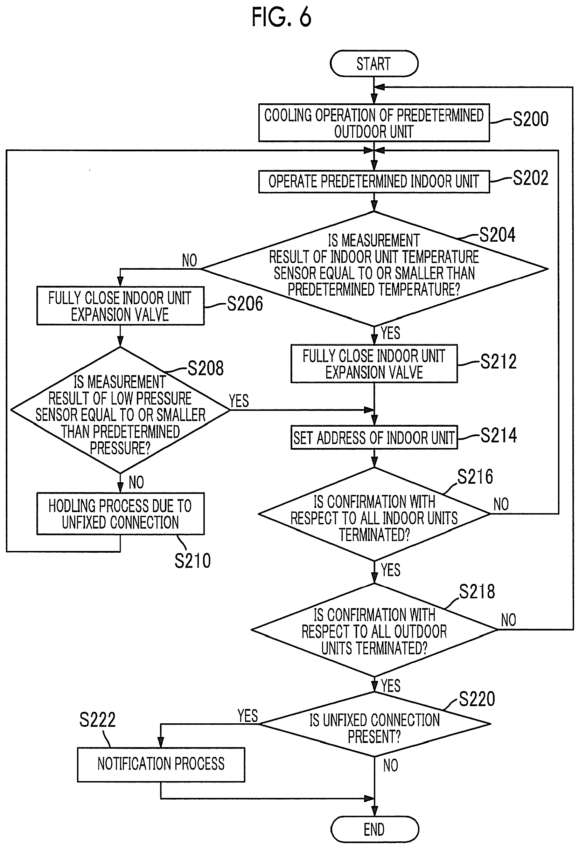

Fig. 6 is a flowchart illustrating a flow of the device authentication process according to the present embodiment. The device authentication process shown in Fig. 6 is an example of a process performed by operating the outdoor unit B for cooling in a case where an outside air temperature is 20°C or higher, for example.

First, in step 200, a predetermined outdoor unit B is operated for cooling. The predetermined outdoor unit B refers to an outdoor unit B having the smallest address among outdoor units B which are not yet operated in the device authentication process. The outdoor units B are operated one by one by operating the compressor 11 at a predetermined rotation speed (for example, 50 rps). In a case where the compressor 11 is not an inverter type, the compressor 11 is operated at a constant speed (power source frequency).

In the next step 202, one indoor unit A having the smallest temporary address is operated. Here, a predetermined pulse command is input to the indoor-unit expansion valve 33, and accordingly, the indoor-unit expansion valve 33 is opened.

In the next step 204, it is determined whether a measurement result of the indoor-unit temperature sensor 35_1 included in the operated indoor unit A is equal to or smaller than a predetermined temperature. In a case where the determination is affirmative, the procedure proceeds to step 212, and in a case where the determination is negative, the procedure proceeds to step 206.

In step 204, as an example, in a case where the measurement result of the indoor-unit temperature sensor 35_1 is lower than that before the device authentication process is started by 10°C or smaller, the affirmative determination is made.

Further, instead of the indoor-unit temperature sensor 35_1, a measurement result of the indoor-unit temperature sensor 35_2 or the indoor-unit temperature sensor 35_3 may be used. In addition, in step 204, by comparing the measurement results of the indoor-unit temperature sensors 35_1, 35_2, and 35_3, the presence or absence of disconnection of the indoor-unit temperature sensors 35_1, 35_2, and 35_3 may be detected at the same time.

In a case where the affirmative determination is made in step 204, this indicates that the outdoor unit B which enters an operation state in step 200 and the indoor unit A which enters an operation state in step 202 are connected to each other through the refrigerant pipe 10. On the other hand, in a case where the negative determination is made in step 204, this indicates that there is a possibility that the outdoor unit B which enters the operation state in step 200 and the indoor unit A which enters the operation state in step 202 are not connected to each other through the refrigerant pipe 10.

In step 206 performed in a case where the negative determination is made in step 204, a pulse command for full-closing is input to the indoor-unit expansion valve 33.

In the next step 208, it is determined whether a measurement result of the low pressure sensor 21_2 is equal to or smaller than a predetermined pressure. In a case where the determination is affirmative, the procedure proceeds to step 214, and in a case where the determination is negative, the procedure proceeds to step 210.

In step 208, as an example, in a case where the measurement result of the low pressure sensor 21_2 is equal to or smaller than 0.30 MPa, the affirmative determination is made.

In a case where the affirmative determination is made in step 208, this indicates that the outdoor unit B which enters the operation state in step 200 and the indoor unit A which enters the operation state in step 202 are connected to each other through the refrigerant pipe 10. On the other hand, in a case where the negative determination is made in step 208, this indicates the outdoor unit B which enters the operation state in step 200 and the indoor unit A which enters the operation state in step 202 are not connected to each other through the refrigerant pipe 10.

In the next step 210, since the connection between the indoor unit A and the outdoor unit B for which the negative determination is made in step 208 is not fixed, a holding process for storing the temporary address of the indoor unit A in a storage unit (not shown) of the control device 3 is performed, and then, the procedure returns to step 202.

In a case where the procedure returns to step 202, indoor units A which are not operated are operated one by one in an ascending order of temporary addresses.

Further, even in the case of an indoor unit A of which the connection is not fixed, in a case where the connection to the outdoor unit B is confirmed later, the temporary address of the indoor unit A is deleted from the storage unit of the control device 3.

In step 212 performed in a case where the affirmative determination is made in step 204, a pulse command for full-closing is input to the indoor-unit expansion valve 33.

In the next step 214, the address of the indoor unit A which enters the operation state in step 202 is set by the address setting unit 70. Specifically, the address setting unit 70 reads indoor unit specification information from the device attribute storage area 72 and adds an address or the like of the outdoor unit B connected thereto, to thereby set the address.

Thus, the address of the indoor unit A is set in association with the outdoor unit B to be connected.

In this way, in a case where the outdoor unit B is operated and the indoor-unit expansion valve 33 reaches a predetermined opening degree, the address setting unit 70 sets the address of the indoor unit A of which the operation is confirmed by combining indoor unit specification information thereof, a number (address) of the outdoor unit B which is operated, and the like.

Thus, the operation confirmation of the indoor unit A connected to the outdoor unit B through the refrigerant pipe 10 and the address setting thereof are performed at the same time, and thus, the address for each indoor unit A is uniquely determined with high efficiency.

In the next step 216, it is determined whether confirmation of connection to the outdoor unit B which enters the operation state in step 200 is terminated with respect to all indoor units A. In a case where the determination is affirmative, the procedure proceeds to step 218. On the other hand, in a case where the determination is negative, the procedure returns to step 202.

In step 218, it is determined whether all the indoor units A enter the operation state and the confirmation of the connection to the outdoor unit B is terminated. In a case where the determination is affirmative, the procedure proceeds to step 220. On the other hand, in a case where the determination is negative, the procedure returns to step 200.

In a case where the procedure returns to step 200, outdoor units B which are not operated are operated one by one in an ascending order of addresses.

In step 220, it is determined whether there is an indoor unit A of which the connection is not fixed. In a case where the determination is affirmative, the procedure proceeds to step 222, and in a case where the determination is negative, the device authentication process is terminated.

In step 222, a notification process of displaying a temporary address of the indoor unit A of which the connection is not fixed on a monitor of the control device 3 is performed, for example, and then, the device authentication process is terminated.

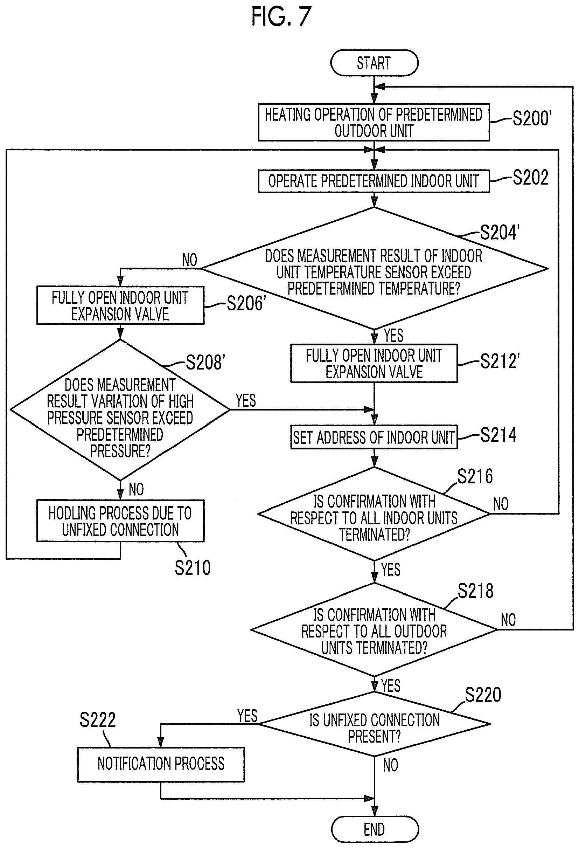

Fig. 7 is a flowchart illustrating a flow of a device authentication process performed when an outside air temperature is lower than 20°C, for example, and the outdoor unit B is operated for heating. In Fig. 7, the same reference numerals as in Fig. 6 are given to the same steps as in Fig. 6, and repetitive description will not be partially or entirely made.

In step 200', a predetermined outdoor unit B is operated for heating.

In the next step 202, one indoor unit A having the smallest temporary address is operated, and in the next step 204', it is determined whether a measurement result of the indoor-unit temperature sensor 35_1 exceeds a predetermined temperature. In a case where the determination is affirmative, the procedure proceeds to step 212'. On the other hand, in a case where the determination is negative, the procedure proceeds to step 206'.

In step 204', as an example, in a case where the measurement result of the indoor-unit temperature sensor 35_1 exceeds 10°C compared with that before the device authentication process is started, the affirmative determination is made.

In step 206', a pulse command for full-opening is input to the indoor-unit expansion valve 33.

In the next step 208', it is determined whether a variation of measurement results of the high pressure sensor 21_1 exceeds a predetermined pressure. In a case where the determination is affirmative, the procedure proceeds to step 214, and in a case where the determination is negative, the procedure proceeds to step 210.

In step 208', as an example, in a case where the variation of the measurement results of the high pressure sensor 21_1 is equal to or smaller than 0.30 MPa, the affirmative determination is made.

In a case where the affirmative determination is made in step 208', this indicates that the outdoor unit B which enters the operation state in step 200' and the indoor unit A which enters the operation state in step 202 are connected to each other through the refrigerant pipe 10. On the other hand, in a case where the negative determination is made in step 208', this indicates the outdoor unit B which enters the operation state in step 200' and the indoor unit A which enters the operation state in step 202 are not connected to each other through the refrigerant pipe 10.

In the next step 210, a holding process of storing a temporary address of the indoor unit A for which the negative determination is made in step 208' in the storage unit (not shown) of the control device 3 as an indoor unit of which the connection to the outdoor unit B is not fixed, and then, the procedure returns to step 202.

In step 212 performed in a case where the affirmative determination is made in step 204', a pulse command for full-opening is input to the indoor-unit expansion valve 33.

In the next step 214, the address of the indoor unit A which enters the operation state in step 202 is set by the address setting unit 70. Further, it is determined whether connection confirmation is terminated with respect to all the indoor units A and all the outdoor units B in steps 216 and 218, and then, the device authentication process is terminated.

Next, rewriting of a setting address will be described.

In this embodiment, a setting address may be rewritten into an arbitrary value through a predetermined device.

An example of a setting address rewriting procedure is as follows.

In this embodiment, an operator (service man) can rewrite a setting address stored in an indoor unit A by connecting a predetermined mobile terminal apparatus to an external connection terminal provided in an outdoor unit B. Since the mobile terminal apparatus is able to read indoor unit specification information from the indoor unit A and to display the read indoor unit specification information, the operator can determine an inappropriate functional part or the like by confirming the read indoor unit specification information.

Thus, for example, an owner of a building that is provided with the air-conditioning system 1 can rewrite a setting address into an arbitrary value for the purpose of changing a management method, for example.

Further, in a case where a mobile terminal apparatus is connected to the outdoor-unit local controller 62, authentication is performed with respect to the mobile terminal apparatus. Only when the authentication is satisfied, menu images for selecting an operation capable of being performed in the mobile terminal apparatus are displayed on a screen.

In a case where the air-conditioning system 1 can be connected to a server of an external network, for example, the authentication is performed by collating authentication information stored in the server with authentication information stored in the mobile terminal apparatus.

As the menu images, selection images for rewriting of indoor unit specification information or a setting address of the indoor unit A, failure diagnosis thereof, device authentication thereof, or the like are displayed, for example.

Thus, rewriting of a setting address or the like which is not intended by an operator is prevented.

Further, in a case where rewriting is to be performed in excess of an allowable value with respect to the indoor unit specification information or the setting address of the indoor unit A, the control device 3 detects this situation, and sends an error message (alarm) to the mobile terminal apparatus.

In this way, since the control device 3 displays an alarm in a case where rewriting exceeding an allowable value occurs, it is possible to prevent an erroneous input for rewriting from an operator.

Further, if a mobile terminal apparatus is connected to the outdoor-unit local controller 62, indoor unit specification information before change is stored in the mobile terminal apparatus, and in a case where the indoor unit specification information is changed, the indoor unit specification information before and the indoor unit specification information after change are displayed on a screen of the mobile terminal apparatus for comparison. In addition, a confirmation button is also displayed on the screen, and starting of the air-conditioning system 1 is not allowed as long as the confirmation button is not clicked by an operator.

In this way, since the operator confirms input information, in a case where an error occurs, it is possible to recognize whether the error is based on an input mistake of the operator.

As described above, in the air-conditioning system 1 according to this embodiment, the plural outdoor units B, the plural indoor units A, and the control device 3 are connected to one another through the common bus 5, and performs transmission and reception of information. Further, an address of the indoor unit A is set to include air-conditioner specification information which is a value indicating a specification of the indoor unit A using the address setting unit 70 included in the indoor-unit local controller 52.

Thus, an address for each of the plural indoor units A can be uniquely determined.

Hereinbefore, the invention has been described with reference to the above-mentioned embodiments, but a technical scope of the invention is not limited to the scope disclosed in the above-described embodiments. Various modifications or improvements may be added to the above-described embodiments in a range without departing from the scope of the invention as defined by the appended claims.

Further, the above-mentioned embodiments may be appropriately combined with each other.

For example, in the above-mentioned embodiments, a configuration in which a system in which plural devices are connected to each other by a communication medium is used as the air-conditioning system 1 is shown, but the invention is not limited thereto, and a configuration in which the system is used as another system may be used.

As another system, for example, a system in which a battery type forklift that is operated in a storeroom managed by an automatic system is used as the above-described device, a system in which a machine tool in a line managed in a factory is used as the above-described device, a system in which plural heat source devices (electric turbo refrigerators) managed in district conditioning or a factory are used as the above-described devices, a wind farm in which plural wind power generation devices are used as the above-described devices, or a system in which plural lithium batteries are provided and a battery management unit (BMU) of each lithium battery is used as the above-described device, or the like.

Further, in the above-described embodiments, a configuration in which the address setting unit 70 is provided in the indoor-unit local controller 52 of the indoor unit A is shown, but the invention is not limited thereto, and a configuration in which the address setting unit 70 is provided in the control device 3, indoor unit specification information is read from the device attribute storage area 72 of each indoor unit A through the common bus 5, and an address of each indoor unit A is set may be used.

Furthermore, the flows of the trial run process and the device authentication process described in the above-described embodiment are exemplary, and thus, deletion of an unnecessary step, addition of a new step, or change of processing orders may be performed in a range without departing from the scope of the invention which is defined by the appended claims.

### Reference Signs List

- A: indoor unit
- B: outdoor unit
- 1: air-conditioning system
- 5: common bus
- 52: indoor-unit local controller
- 70: address setting unit
- 72: device attribute storage area

## Claims

1. An air-conditioning system (1) comprising:
one or a plurality of outdoor units (B);
a plurality of indoor units (A1, A2); and
a control device (3) provided with an outdoor unit control device (43),an indoor unit control device (41, 42), and a trial run control unit (44);
wherein each indoor unit (A1, A2) includes an address setting device configured to set an address of each indoor unit (A1, A2),
wherein the outdoor unit control device (43) is configured to control each outdoor unit (B) and the indoor unit control device (41, 42) is configured to control each indoor unit (A1, A2),
wherein said control device (3) and a plurality of devices among the outdoor units (B) and the indoor units (A1, A2) are connected to each other through a communication medium (5), and transmission and reception of information is performed between the control device (3) and said plurality of devices among the outdoor units (B) and the indoor units (A1, A2),
wherein the address setting device comprises setting means (70) configured to set an address of each indoor unit (A1, A2) and that is provided with each indoor unit (A1, A2), and
wherein the setting means (70) is configured to set, in a case where a trial run is performed by the trial run control unit (44) such that each outdoor unit (B) is operated, a predetermined pulse command is input to an expansion valve (33) of each indoor unit (A1, A2), and the expansion valve (33) is opened to operate the indoor unit (A1, A2), a combination of a unique identification number of the outdoor unit (B) which is operated and a value indicating a specification of the indoor unit (A1, A2) as the address of the indoor unit (A1, A2) of which the operation is confirmed by determining that an inlet refrigerant temperature in the indoor unit (A1, A2) is equal to or smaller than a predetermined temperature, or a pressure of a refrigerant sent to a compressor of the outdoor unit (B) is equal to or smaller than a predetermined pressure and by performing confirmation of connection between the outdoor unit (B) and the indoor (A1, A2) unit through a refrigerant pipe (10).

2. The air-conditioning system (1) according to claim 1,
wherein the setting means (70) reads specification information of each indoor unit (A1, A2) stored in a device attribute storage area (72) of storage means of the indoor unit (A1, A2) to set an address of each indoor unit (A1, A2).

3. The air-conditioning system (1) according to claim 1 or 2,
wherein the address is rewritable to an arbitrary value.

4. An address setting method of an air-conditioning system comprising:
one or a plurality of outdoor units (B);
a plurality of indoor units (A1, A2); and
a control device (3) provided with an outdoor unit control device (43),an indoor unit control device (41, 42), and a trial run control unit (44);
wherein a plurality of devices among the outdoor units (B) and the indoor units (A1, A2) and the control device (3) are connected to each other through a communication medium (5) and transmission and reception of information is performed between the control device (3) and said plurality of devices among the outdoor units (B) and the indoor units (A1, A2),
the method comprising:
a first process of reading a value indicating a specification of each indoor unit (A1, A2) from storage means; and
a second process of setting, in a case where a trial run is performed by the trial run control unit (44) such that each outdoor unit (B) is operated, a predetermined pulse command is input to an expansion valve (33) of each indoor unit (A1, A2), and the expansion valve (33) is opened to operate the indoor unit (A1, A2), a combination of a unique identification number of the outdoor unit (B) connected to the indoor unit (A1, A2) and the value indicating the specification of the indoor unit (A1, A2) read in the first process, as an address of each indoor unit (A1, A2) of which the operation is confirmed by determining that an inlet refrigerant temperature in the indoor unit (A1, A2) is equal to or smaller than a predetermined temperature, or a pressure of a refrigerant sent to a compressor of the outdoor unit (B) is equal to or smaller than a predetermined pressure and by performing confirmation of connection between the outdoor unit (B) and the indoor (A1, A2) unit through a refrigerant pipe (10).

## Patentansprüche

1. Klimatisierungssystem (1), das Folgendes umfasst:
eine oder eine Vielzahl von Außeneinheiten (B);
eine Vielzahl von Inneneinheiten (A1, A2) und
eine Steuervorrichtung (3), die mit einer Außeneinheitssteuervorrichtung (43), einer Inneneinheitssteuervorrichtung (41, 42) und einer Probelaufsteuereinheit (44) ausgestattet ist;
wobei jede Inneneinheit (A1, A2) eine Adresseinstellvorrichtung beinhaltet, die dazu ausgelegt ist, eine Adresse jeder Inneneinheit (A1, A2) einzustellen,
wobei die Außeneinheitssteuervorrichtung (43) dazu ausgelegt ist, jede Außeneinheit (B) zu steuern, und die Inneneinheitssteuervorrichtung (41, 42) dazu ausgelegt ist, jede Inneneinheit (A1, A2) zu steuern,
wobei die Steuervorrichtung (3) und eine Vielzahl von Vorrichtungen unter den Außeneinheiten (B) und den Inneneinheiten (A1, A2) über ein Kommunikationsmedium (5) miteinander verbunden sind und Übertragung und Empfang von Informationen zwischen der Steuervorrichtung (3) und der Vielzahl von Vorrichtungen unter den Außeneinheiten (B) und den Inneneinheiten (A1, A2) durchgeführt wird,
wobei die Adresseinstellvorrichtung ein Einstellmittel (70) umfasst, das dazu ausgelegt ist, eine Adresse von jeder Inneneinheit (A1, A2) einzustellen, und mit dem jede Inneneinheit (A1, A2) ausgestattet ist, und
wobei das Einstellmittel (70) in einem Fall, in dem ein Probelauf von der Probelaufsteuereinheit (44) durchgeführt wird, derart, dass jede Außeneinheit (B) betrieben wird, ein vorbestimmter Impulsbefehl in ein Expansionsventil (33) jeder Inneneinheit (A1, A2) eingegeben und das Expansionsventil (33) geöffnet wird, um die Inneneinheit (A1, A2) zu betreiben, dazu ausgelegt ist, eine Kombination einer eindeutigen Identifikationsnummer der Außeneinheit (B), die betrieben wird, und einem Wert, der eine Spezifikation der Inneneinheit (A1, A2) anzeigt, als die Adresse der Inneneinheit (A1, A2) einzustellen, deren Betrieb durch Bestimmen, dass eine Kältemitteleinlasstemperatur in der Inneneinheit (A1, A2) gleich oder kleiner als eine vorbestimmte Temperatur ist oder ein Druck eines Kältemittels, das an einen Verdichter der Außeneinheit (B) geschickt wird, gleich oder kleiner als ein vorbestimmter Druck ist, und durch Durchführen einer Bestätigung einer Verbindung zwischen der Außeneinheit (B) und der Inneneinheit (A1, A2) über eine Kältemittelleitung (10) bestätigt wird.

2. Klimatisierungssystem (1) nach Anspruch 1,
wobei das Einstellmittel (70) Spezifikationsinformationen jeder Inneneinheit (A1, A2), die in einem Vorrichtungsattributspeicherbereich (72) eines Speichermittels der Inneneinheit (A1, A2) gespeichert ist, liest, um eine Adresse jeder Inneneinheit (A1, A2) einzustellen.

3. Klimatisierungssystem (1) nach Anspruch 1 oder 2,
wobei die Adresse zu einem willkürlichen Wert umgeschrieben werden kann.

4. Adresseinstellverfahren eines Klimatisierungssystems, das Folgendes umfasst:
eine oder eine Vielzahl von Außeneinheiten (B);
eine Vielzahl von Inneneinheiten (A1, A2); und
eine Steuervorrichtung (3), die mit einer Außeneinheitssteuervorrichtung (43), einer Inneneinheitssteuervorrichtung (41, 42) und einer Probelaufsteuereinheit (44) ausgestattet ist;
wobei eine Vielzahl von Vorrichtungen unter den Außeneinheiten (B) und den Inneneinheiten (A1, A2) und die Steuervorrichtung (3) über ein Kommunikationsmedium (5) miteinander verbunden sind und Übertragung und Empfang von Informationen zwischen der Steuervorrichtung (3) und der Vielzahl von Vorrichtungen unter den Außeneinheiten (B) und den Inneneinheiten (A1, A2) durchgeführt wird,
wobei das Verfahren Folgendes umfasst:
einen ersten Prozess des Lesens eines Wertes, der eine Spezifikation jeder Inneneinheit (A1, A2) anzeigt, aus einem Speichermittel; und
in einem Fall, in dem ein Probelauf von der Probelaufsteuereinheit (44) durchgeführt wird, derart, dass jede Außeneinheit (B) betrieben wird, ein vorbestimmter Impulsbefehl in ein Expansionsventil (33) jeder Inneneinheit (A1, A2) eingegeben und das Expansionsventil (33) geöffnet wird, um die Inneneinheit (A1, A2) zu betreiben, einen zweiten Prozess des Einstellens einer Kombination einer eindeutigen Identifikationsnummer der Außeneinheit (B), die mit der Inneneinheit (A1, A2) verbunden ist, und dem Wert, der die Spezifikation der Inneneinheit (A1, A2) anzeigt und im ersten Prozess gelesen wird, als eine Adresse jeder Inneneinheit (A1, A2) einzustellen, deren Betrieb durch Bestimmen, dass eine Kältemitteleinlasstemperatur in der Inneneinheit (A1, A2) gleich oder kleiner als eine vorbestimmte Temperatur ist oder ein Druck eines Kältemittels, das an einen Verdichter der Außeneinheit (B) geschickt wird, gleich oder kleiner als ein vorbestimmter Druck ist, und durch Durchführen einer Bestätigung einer Verbindung zwischen der Außeneinheit (B) und der Inneneinheit (A1, A2) über eine Kältemittelleitung (10) bestätigt wird.

## Revendications

1. Système de climatisation (1) comprenant :
une ou une pluralité d'unités extérieures (B) ;
une pluralité d'unités intérieures (A1, A2) ; et
un dispositif de commande (3) prévu avec un dispositif de commande d'unité extérieure (43), un dispositif de commande d'unité intérieure (41, 42) et une unité de commande d'essai (44) ;
dans lequel chaque unité intérieure (A1, A2) comprend un dispositif d'établissement d'adresse configuré pour établir une adresse de chaque unité intérieure (A1, A2),
dans lequel le dispositif de commande d'unité extérieure (43) est configuré pour commander chaque unité extérieure (B) et le dispositif de commande d'unité intérieure (41, 42) est configuré pour commander chaque unité intérieure (A1, A2),
dans lequel ledit dispositif de commande (3) et une pluralité de dispositifs parmi les unités extérieures (B) et les unités intérieures (A1, A2) sont raccordés entre eux par le biais d'un moyen de communication (5) et la transmission et la réception de l'information sont réalisées entre le dispositif de commande (3) et ladite pluralité de dispositifs parmi les unités extérieures (B) et les unités intérieures (A1, A2),
dans lequel le dispositif d'établissement d'adresse comprend un moyen d'établissement (70) configuré pour établir une adresse de chaque unité intérieure (A1, A2) et qui est prévu avec chaque unité intérieure (A1, A2), et
dans lequel le moyen d'établissement (70) est configuré pour établir, dans un cas dans lequel un essai est réalisé par l'unité de commande d'essai (44) de sorte que chaque unité extérieure (B) est actionnée, une commande d'impulsion prédéterminée est entrée dans une valve d'expansion (33) de chaque unité intérieure (A1, A2), et la valve d'expansion (33) est ouverte pour actionner l'unité intérieure (A1, A2), une combinaison d'un nombre d'identification unique de l'unité extérieure (B) qui est actionnée, et une valeur indiquant une spécification de l'unité intérieure (A1, A2) en tant qu'adresse de l'unité intérieure (A1, A2) dont le fonctionnement est confirmé en déterminant qu'une température de réfrigérant d'entrée dans l'unité intérieure (A1, A2) est égale ou inférieure à une température prédéterminée, ou une pression d'un réfrigérant envoyé à un compresseur de l'unité extérieure (B) est égale ou inférieure à une pression prédéterminée et en réalisant la confirmation de raccordement entre l'unité extérieure (B) et l'unité d'entrée (A1, A2) par le biais d'un tuyau de réfrigérant (10).

2. Système de climatisation (1) selon la revendication 1,
dans lequel le moyen d'établissement (70) lit l'information de spécification de chaque unité intérieure (A1, A2) stockée dans une zone de stockage d'attribution de dispositif (72) du moyen de stockage de l'unité intérieure (A1, A2) pour établir une adresse de chaque unité intérieure (A1, A2).

3. Système de climatisation (1) selon la revendication 1 ou 2, dans lequel l'adresse peut être réécrite sur une valeur arbitraire.

4. Procédé d'établissement d'adresse d'un système de climatisation comprenant :
une ou une pluralité d'unités extérieures (B) ;
une pluralité d'unités intérieures (A1, A2) ; et
un dispositif de commande (3) prévu avec un dispositif de commande d'unité extérieure (43), un dispositif de commande d'unité intérieure (41, 42) et une unité de commande d'essai (44) ;
dans lequel une pluralité de dispositifs parmi les unités extérieures (B) et les unités intérieures (A1, A2) et le dispositif de commande (3) sont raccordés entre eux par le biais d'un moyen de communication (5) et la transmission et la réception de l'information sont réalisées entre le dispositif de commande (3) et ladite pluralité de dispositifs parmi les unités extérieures (B) et les unités intérieures (A1, A2),
le procédé comprenant :
un premier processus pour lire une valeur indiquant une spécification de chaque unité intérieure (A1, A2) du moyen de stockage ; et
un second processus pour établir, dans un cas dans lequel un essai est réalisé par l'unité de commande d'essai (44), de sorte que chaque unité extérieure (B) est actionnée, une commande d'impulsion prédéterminée est entrée dans une valve d'expansion (33) de chaque unité intérieure (A1, A2), et la valve d'expansion (33) est ouverte pour actionner l'unité intérieure (A1, A2), une combinaison d'un numéro d'identification unique de l'unité extérieure (B) raccordée à l'unité intérieure (A1, A2) et de la valeur indiquant la spécification de l'unité intérieure (A1, A2) lue dans le premier processus, en tant qu'adresse de chaque unité intérieure (A1, A2) dont le fonctionnement est confirmé en déterminant qu'une température de réfrigérant d'entrée dans l'unité intérieure (A1, A2) est égale ou inférieure à une température prédéterminée, ou une pression d'un réfrigérant envoyé à un compresseur de l'unité extérieure (B) est égale ou inférieure à une pression prédéterminée et en réalisant la confirmation de raccordement entre l'unité extérieure (B) et l'unité intérieure (A1, A2) par le biais d'un tuyau de réfrigérant (10).
